Europäisches Patentamt

European Patent Office

Office européen des brevets

(19)

(11) Veröffentlichungsnummer: **0 297 221 B1**

## EUROPÄISCHE PATENTSCHRIFT

(12)

(45) Veröffentlichungstag der Patentschrift: **18.09.91**

(21) Anmeldenummer: **88105427.4**

(22) Anmeldetag: **06.04.88**

(51) Int. Cl.5: **F25B 45/00**, F25B 41/04, B60H 1/32

(54) **Vorrichtung zur Klimatisierung des Innenraums von Personenkraftwagen.**

(30) Priorität: **29.06.87 DE 3721388**

(43) Veröffentlichungstag der Anmeldung:
**04.01.89 Patentblatt  89/01**

(45) Bekanntmachung des Hinweises auf die
Patenterteilung:
**18.09.91 Patentblatt  91/38**

(84) Benannte Vertragsstaaten:
**DE ES FR GB IT SE**

(56) Entgegenhaltungen:
**CH-A- 410 026      DE-B- 1 231 729
DE-C- 898 751       US-A- 2 943 457
US-A- 3 525 233     US-A- 3 905 202
US-A- 3 934 425     US-A- 4 068 494
US-A- 4 253 312**

(73) Patentinhaber: **Behr GmbH & Co.
Mauserstrasse 3
W-7000 Stuttgart 30(DE)**

(72) Erfinder: **Wallner, Rolf, Dr.-Ing.
Stützenburgstrasse 4
W-7000 Stuttgart 1(DE)**

(74) Vertreter: **Dreiss, Hosenthien & Fuhlendorf
Gerokstrasse 6
W-7000 Stuttgart 1(DE)**

## Beschreibung

Die Erfindung betrifft eine Vorrichtung zur Klimatisierung des Innenraums von Personenkraftwagen mit einem aus einem Niederdruckteil und einem Hochdruckteil bestehenden Kältemittelkreislauf, bei dem das dampfförmige Kältemittel aus einem Verdampfer von einem Kompressor abgezogen, unter Druckerhöhung einem Kondensator zur Abkühlung und Verflüssigung zugeführt und das verflüssigte Kältemittel in einem Sammelbehälter gesammelt wird, aus dem es über ein Expansionsventil in den Verdampfer unter Druckabfall und Abkühlung ableitbar ist, wobei zwischen dem Kompressor und dem Kondensator im Hochdruckteil des Kältemittelkreislaufs ein Überdrucksicherheitsventil mit einem Abblasausgang vorgesehen ist.

Um solche Vorrichtungen möglichst leichtgewichtig bauen zu können, wird der Maximaldruck im Kältemittelkreislauf durch das Überdrucksicherheitsventil begrenzt. Nach der derzeit gültigen SAE-Norm J 639 darf der Kältemitteldruck in einer Klimaanlage eines Fahrzeugs 35,5 bar beim Kältemittel R12 bzw. 42,4 bar bei einem Kältemittel R22 nicht überschreiten. Bei Überschreitung dieser Drücke wird das Kältemittel in die Umgebung abgeblasen. Der Hochdruckteil des Kältemittelkreislaufs muß nach der genannten Norm einen Berstdruck von mindestens dem 2,5-fachen Maximaldruck aufweisen.

Bei besonders ungünstigen Betriebsbedingungen, insbesondere sehr hohen Außentemperaturen und Fehlen des Fahrwinds und damit weitgehendem Ausfall der Wärmeabfuhr kann der Maximaldruck überschritten werden und es zum Abblasen des Kältemittels kommen. Nach den neueren Erkenntnissen sind die üblicherweise verwendeten Kältemittel umweltschädigend. Außerdem fehlt das abgeblasene Kältemittel später dann beim Normalbetrieb der Vorrichtung.

Aus der US-A-39 05 202 ist eine Kälteanlage bekannt mit einer Überdruckrückführung direkt in den Sammelbehälter, so daß das Kältemittel auch in einer Überdruckbetriebsphase im normalen Kreislauf verbleibt. Die Klimaanlage muß daher entsprechend relativ groß ausgelegt werden. Durch die Rückleitung des Kältemittels in den Niederdruckkreislauf geht Energie verloren.

Aus der DE-C-898 751 ist eine Kälteanlage mit einem Kältemittelspeicher mit variablem Volumen bekannt, wobei ein dicht abgeschlossener Gasraum durch eine elastische Membran, einen verschiebbaren Kolben oder einen ziehharmonikaartigen Faltenbalg vom Kältemittel getrennt ist. Beim Erreichen eines Maximaldrucks im Gasraum wird die Kälteanlage stillgesetzt.

In Vermeidung der geschilderten Nachteile liegt der vorliegenden Erfindung die Aufgabe zugrunde, eine Vorrichtung der eingangs genannten Art so weiterzubilden, daß bei möglichst geringem Konstruktionsgewicht und Konstruktionsvolumen ein guter Wirkungsgrad gewährleistet bleibt.

Zur Lösung dieser Aufgabe sieht die Erfindung vor, daß der Abblasausgang des Überdruckventils mit einem Zwischenspeicher für das austretende Kältemittel verbunden ist, daß parallel zum Überdrucksicherungsventil ein einseitig wirkendes Rückströmventil vorgesehen, durch das der Zwischenspeicher bei abfallendem Druck im Hochdruckteil wieder mindestens teilweise entleerbar ist und daß der Zwischenspeicher ggf. mit der Saugleitung des Kompressors in Verbindung steht, vorzugsweise über ein temperatur- und/oder druckgesteuertes Entladeventil.

Platzsparend kann das Überdrucksicherheitsventil und das Rückströmventil als Baueinheit integriert sein, bspw. durch Einbau des Rückströmventils in den Ventilkörper des Überdrucksicherheitsventils.

Eine besonders einfache Anpassung an unterschiedliche Betriebsbedingungen kann dadurch erreicht werden, daß das Aufnahmevolumen des Zwischenspeichers variabel ist.

Der Zwischenspeicher kann als Gasspeicher ausgebildet sein, mit einem Speicherraum für das Kältemittel und einem dicht abgeschlossenen Gasraum, wobei die beiden Räume durch eine elastische Membran voneinander getrennt sind. Solche Gasspeicherkonstruktionen sind bei Hydraulikanlagen oder auch als Druckausgleichgefäße bei Warmwasserheizanlagen im Einsatz.

Bei einer anderen Ausführungsform kann der Zwischenspeicher ziehharmonikaähnlich als Faltenbalg ausgebildet sein. Dabei kann die Längenausdehnung des Faltenbalgs durch mindestens eine ggf. vorgespannte Feder beeinflußt sein, wobei die Vorspannung der Feder zur Anpassung an unterschiedliche Betriebsbedingungen und Vorrichtungstypen einstellbar sein kann.

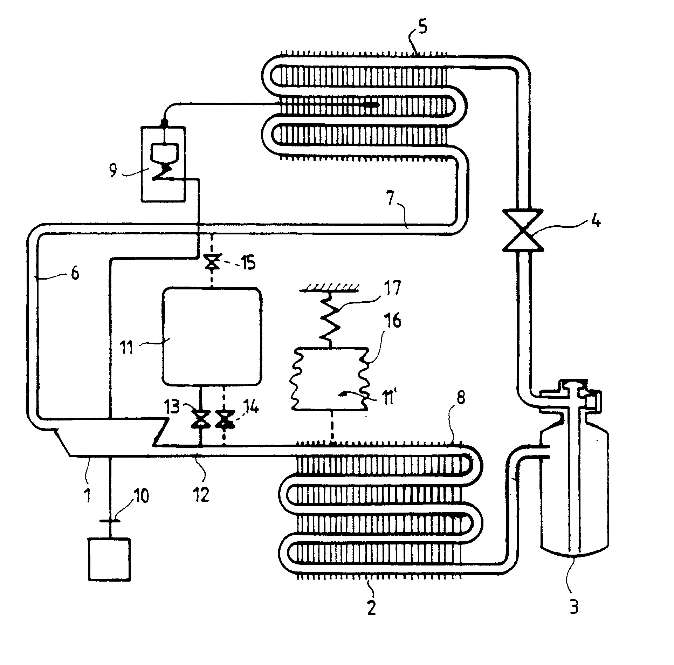

Weitere erfindungsgemäße Ausbildungen sind den Unteransprüchen zu entnehmen und werden mit ihren Vorteilen anhand der beigefügten Zeichnung in der nachstehenden Beschreibung näher erläutert.

Die beigefügte einzige Zeichnung zeigt eine schematische Darstellung einer Vorrichtung zur Klimatisierung des Innenraums von Personenkraftwagen mit verschiedenen Varianten.

Die schematisch dargestellte Klimaanlage für ein Fahrzeug weist einen Kompressor 1 auf, der gasförmiges Kältemittel unter Druckerhöhung in einen Kondensator 2 pumpt. Das Kältemittel verflüssigt sich unter Abkühlung und fließt in einen Sammelbehälter 3 ab. Nach einer Filterung und Entwässerung kann das verflüssigte Kältemittel über ein Expansionsventil 4 unter Druckabfall in einem Verdampfer 5 unter Aufnahme von Umgebungswärme expandieren. Aus dem Verdampfer 5 wird das verdampfte Kältemittel durch eine Saugleitung 6 vom Kompressor 1 angesaugt, komprimiert und wieder dem Kreislauf dem Kondensator 2 zugeführt.

Ein Niederdruckteil 7 des Kältemittelkreislaufs umfaßt den Verdampfer 5 und die Saugleitung 6 bis zum Kompressor, während ein Hochdruckteil 8 den Kondensator und den Sammelbehälter 3 umfaßt. Der Kompressor 1 ist über einen Temperaturschalter 9 an-und ausschaltbar, bspw. über eine Magnetkupplung 10.

Um bei einer normalerweise nicht auftretenden, besonders hohen Umgebungstemperatur den Druck im Hochdruckteil 8 zu begrenzen, ist ein Zwischenspeicher 11 für das komprimierte, aber noch nicht verflüssigte Kältemittel mit der Druckleitung 12 des Kompressors 1 verbunden und zwar über ein Überdrucksicherungsventil 13, das beim Übersteigen eines vorgegebenen Maximaldrucks die Verbindung Druckleitung 12 Zwischenspeicher 11 herstellt. Um den Zwischenspeicher 11 wenigstens teilweise wieder entleeren zu können, ist, wie gestrichelt dargestellt, ein Ruckströmventil 14 vorgesehen, das mit dem Überdrucksicherungsventil 13 kombiniert sein kann.

Zusätzlich kann, wie weiter dargestellt, ein Entladeventil 15 vorgesehen sein, das den Zwischenspeicher 11 mit der Saugleitung 6 verbindet. Dies kann temperaturgesteuert erfolgen, wenn die Umgebungstemperatur wieder absinkt oder wenn im Niederdruckteil 7 ein ausreichend niedriger Druck herrscht. Auf jeden Fall muß vermieden werden, daß im Niederdruckteil 7 in der kritischen Betriebssituation der Druck in unerwünschter Weise sich erhöht. Der Zwischenspeicher 11 kann ein normaler Gasaufnahmebehälter sein, dessen Volumen nach der Größe der Anlage, der erwarteten Maximaltemperatur und dem verwendeten Kältemittel bemessen ist. Der Zwischenspeicher 11 kann auch als an und für sich bekannter Gasspeicher mit einem durch eine Membran abgeschlossenen Druckausgleichraum ausgebildet sein.

An Stelle des ausgezogen dargestellten Zwischenspeichers 11 kann auch ein anders ausgebildeter, volumenvariabler Zwischenspeicher 11' vorgesehen sein, dessen Wandung bspw. ziehharmonikaartig als Faltenbalg 16 ausgebildet sein kann. Der Behälter 11' muß dann längenveränderbar eingebaut werden, wobei die Langenänderung noch durch eine Feder 17, deren Vorspannung ggf. einstellbar ist, begrenzt wird.

## Patentansprüche

1. Vorrichtung zur Klimatisierung des Innenraums von Personenkraftwagen mit einem aus einem Niederdruckteil (7) und einem Hochdruckteil (8) bestehenden Kältemittelkreislauf, bei dem das dampfförmige Kältemittel aus einem Verdampfer (5) von einem Kompressor (1) abgezogen, unter Druckerhöhung einem Kondensator (2) zur Abkühlung und Verflüssigung zugeführt und das verflüssigte Kältemittel in einem Sammelbehälter (3) gesammelt wird, aus dem es über ein Expansionsventil (4) in den Verdampfer (5) unter Druckabfall und Abkühlung ableitbar ist, wobei zwischen dem Kompressor (1) und dem Kondensator (2) im Hochdruckteil (8) des Kältemittelkreislaufs ein. Überdrucksicherungsventil (13) mit einem Abblasausgang vorgesehen ist, **dadurch gekennzeichnet,** daß der Abblasausgang des Überdrucksicherungsventils (13) mit einem Zwischenspeicher (11, 11') für das austretende Kältemittel verbunden ist, daß parallel zum Überdrucksicherungsventil (13) ein einseitig wirkendes Rückströmventil (14) vorgesehen ist, durch das der Zwischenspeicher (11) bei abfallendem Druck im Hochdruckteil (8) wieder mindestens teilweise entleerbar ist und daß der Zwischenspeicher (11) ggf. mit der Saugleitung (6) des Kompressors (1) in Verbindung steht, vorzugsweise über ein temperatur- und/oder druckgesteuertes Entladeventil (15).

2. Vorrichtung nach Anspruch 1, dadurch gekennzeichnet, daß das Überdrucksicherungsventil (13) und das Rückströmventil (14) als Baueinheit integriert ausgebildet sind.

3. Vorrichtung nach Anspruch 1 oder 2, dadurch gekennzeichnet, daß das Aufnahmevolumen des Zwischenspeichers (11, 11') variabel ist.

4. Vorrichtung nach Anspruch 3, dadurch gekennzeichnet, daß der Zwischenspeicher (11) als Gasspeicher ausgebildet ist, mit einem Speicherraum für das Kältemittel und einem dicht abgeschlossenen Gasraum, wobei die beiden Räume durch eine elastische Membran voneinander getrennt sind.

5. Vorrichtung nach Anspruch 3, dadurch gekennzeichnet, daß der Zwischenspeicher (11') ziehharmonikaähnlich als Faltenbalg (16) ausgebildet ist.

6. Vorrichtung nach Anspruch 5, dadurch gekennzeichnet, daß die Längsausdehnung des Faltenbalgs (16) durch mindestens eine, ggf. vorgespannte Feder, in ihrer Vorspannung vorzugsweise verstellbare Feder (17) beeinflußt ist.

## Claims

1. Apparatus for air conditioning the interior of passenger motor vehicles comprising a coolant circuit which comprises a low pressure portion (7) and a high pressure portion (8) and in which the coolant in vapour form is drawn from an evaporator (5) by a compressor (1), and passed with an increase in pressure to a condenser (2) for cooling and liquefaction and the liquified coolant is collected in a collecting container (3) from which it can be passed by way of an expansion valve (4) into the evaporator (5) with a drop in pressure and with cooling, wherein provided between the compressor (1) and the condenser (2) in the high pressure portion (8) of the coolant circuit is an excess pressure safety valve (13) with a blow-off outlet characterised in that the blow-off outlet of the excess pressure safety valve (13) is connected to an intermediate storage device (11, 11') for the issuing coolant, that provided in parallel with the excess pressure safety valve (13) is a unidirectional check valve (14) through which the intermediate storage device (11) can be at least partially emptied again with a fall in pressure in the high pressure portion (8) and that the intermediate storage device (11) is possibly connected to the intake line (6) of the compressor (1), preferably by way of a temperature- and/or pressure-controlled discharge valve (15).

2. Apparatus according to claim 1 characterised in that the excess pressure safety valve (13) and the check valve (14) are integrated as a structural unit.

3. Apparatus according to claim 1 or claim 2 characterised in that the receiving volume of the intermediate storage device (11, 11') is variable.

4. Apparatus according to claim 3 characterised in that the intermediate storage bans (11) is in the form of a gas storage means having a storage space for the coolant and a sealingly closed gas space, wherein the two spaces are separated from each other by a resilient diaphragm.

5. Apparatus according to claim 3 characterised in that the intermediate storage device (11') is of a concertina-like configuration in the form of a bellows (16).

6. Apparatus according to claim 5 characterised in that the longitudinal extension of the bellows (16) is influenced by at least one spring (17), possibly a prestressed spring, which is preferably adjustable in respect of its prestressing.

**Revendications**

1. Dispositif de climatisation de l'habitacle de véhicules automobiles de tourisme, comportant un circuit de réfrigérant qui est constitué d'une partie basse pression (7) et d'une partie haute pression (8) et dans lequel le réfrigérant, sous forme de vapeur, est extrait d'un évaporateur (5) par un compresseur (1), amené, avec augmentation de pression, à un condenseur (2) pour refroidissement et liquéfaction et dans lequel le réfrigérant, liquéfié, est collecté dans un réservoir de collecte (3) d'où, par l'intermédiaire d'une soupape d'expansion (4), il peut être conduit dans l'évaporateur (5) avec diminution de pression et refroidissement, étant précisé qu'entre le compresseur (1) et le condenseur (2), dans la partie haute pression (8) du circuit du réfrigérant, est prévue une soupape de sécurité (13) en cas de surpression, présentant une sortie d'évacuation, dispositif caractérisé par le fait que la sortie d'évacuation de la soupape de sécurité (13) en cas de surpression est reliée avec un réservoir intermédiaire (11, 11') pour le réfrigérant qui en sort, que, parallèlement à la soupape de sécurité (13) en cas de surpression, est prévue une soupape de retour (14), à action unidirectionnelle, par laquel en cas de baisse de pression dans la partie haute pression (8), le réservoir intermédiaire (11) peut à nouveau se vider au moins partiellement, et que le réservoir intermédiaire (11) est éventuellement relié avec la conduite d'aspiration (6) du compresseur (1), de préférence par l'intermédiaire d'une vanne de décharge (15) commandée par la température et/ou par la pression.

2. Dispositif selon la revendication 1, caractérisé par le fait que la soupape de sécurité (13) en cas de surpression et la soupape de retour (14) sont conçues intégrées en un ensemble.

3. Dispositif selon la revendication 1 ou 2, caractérisé par le fait que le volume de réception du réservoir intermédiaire (11, 11') est variable.

4. Dispositif selon la revendication 3, caractérisé par le fait que le réservoir intermédiaire (11) est conçu en tant que réservoir à gaz comportant une chambre de réserve pour le réfrigérant et une chambre à gaz hermétiquement close, les deux chambres étant séparées l'une de l'autre par une membrane élastique.

5. Dispositif selon la revendication 3, caractérisé par le fait que le réservoir intermédiaire (11') est conçu semblable à un accordéon sous forme de soufflet (16).

6. Dispositif selon la revendication 5, caractérisé par le fait que l'extension longitudinale du soufflet (16) est influencée par au moins un ressort, éventuellement précontraint, de préférence à précontrainte réglable (17).